## Europäisches Patentamt

## European Patent Office

## Office européen des brevets

(11) Veröffentlichungsnummer: **0 149 694**
**B1**

(12) **EUROPÄISCHE PATENTSCHRIFT**

(45) Veröffentlichungstag der Patentschrift:
**19.11.87**

(21) Anmeldenummer: **84100618.2**

(22) Anmeldetag: **20.01.84**

(51) Int. Cl.⁴: **B 65 G 47/26,** B 65 G 13/071,
B 65 G 13/11

(54) **Friktionsrollenbahn.**

(30) Priorität: **19.01.84 DE 3401634**

(43) Veröffentlichungstag der Anmeldung:
**31.07.85 Patentblatt 85/31**

(45) Bekanntmachung des Hinweises auf die Patenterteilung:
**19.11.87 Patentblatt 87/47**

(84) Benannte Vertragsstaaten:
**AT FR GB IT SE**

(56) Entgegenhaltungen:
**DE - A - 2 502 557**
**DE - A - 3 148 176**
**DE - A - 3 222 936**
**DE - A - 3 227 764**
**DE - B - 1 041 898**
**DE - B - 2 107 491**
**DE - U - 7 716 809**
**DE - U - 8 236 827**
**FR - A - 2 508 422**
**US - A - 2 748 919**

(73) Patentinhaber: **LSW Maschinenfabrik GmbH,
Uhthoffstrasse 1, D-2820 Bremen 70 (DE)**

(72) Erfinder: **Löwenstein, Erwin, Dipl.-Ing.,
Karuschenweg 65, D-2900 Oldenburg (DE)**
Erfinder: **Simonis, Gerhard, Dipl.-Ing., Brauteichen 18,
D-2820 Bremen 70 (DE)**

(74) Vertreter: **Goddar, Heinz J., Dr. et al, FORRESTER &
BOEHMERT Widenmayerstrasse 4/I,
D-8000 München 22 (DE)**

## Beschreibung

Die Erfindung betrifft eine Friktionsrollenbahn nach dem Oberbegriff des Anspruchs 1.

Derartige Friktionsrollenbahnen, die dem Transport einzelner Einheiten in Fertigungsbetrieben, beispielsweise in der Automobilindustrie, dienen, sind aus der DE-A-3 148 176, DE-A-3 222 936 und DE-U-7 716 809 bekannt.

Bei den vorbekannten Friktionsrollenbahnen sitzen die kegelförmigen Räder fest auf den Längs- bzw. Querwellen auf, ein einfaches Abkoppeln bestimmter Querwellen von der diese antreibenden Längswelle ist nicht möglich.

Der Erfindung liegt die Aufgabe zugrunde, die vorbekannte Friktionsrollenbahn derart auszugestalten, dass einzelne der Querwellen von der Längswelle abgekoppelt werden können.

Erfindungsgemäss wird diese Aufgabe durch die im Kennzeichen des Anspruches 1 angegebenen Merkmale gelöst. Der Anspruch 2 gibt eine vorteilhafte Ausgestaltung der Erfindung an.

In der nachfolgenden Beschreibung sind Ausführungsbeispiele der Erfindung anhand einer Zeichnung im einzelnen erläutert. Dabei zeigen:

Fig. 1 die erfindungsgemässe Friktionsrollenbahn, wobei die Bahnabdeckung und die Abdeckung der Seitenwangen auf der oberen Hälfte abgenommen sind;

Fig. 2 einen Schnitt durch die Längswelle der Friktionsrollenbahn von Fig. 1 in vergrösserter Darstellung;

Fig. 3 einen Schnitt senkrecht zur Längswelle entlang der Linie A-A von Fig. 2;

Fig. 4 einen Schnitt senkrecht zur Längswelle entlang der Linie B-B von Fig. 2;

Fig. 5 einen Schnitt durch eine der Querwellen der Friktionsrollenbahn von Fig. 1, wobei in der linken, zusammenhängenden Zeichnungshälfte ein Ausführungsbeispiel einer rein gewichtsbelasteten Friktionsrolle und rechts ausgerückt ein Ausführungsbeispiel einer zusätzlich in bezüglich der Querwelle axialer Richtung federbelasteten Friktionsrolle wiedergegeben ist;

Fig. 6 einen Schnitt entlang der Linie C-C von Fig. 5; und

Fig. 7 einen Schnitt entlang der Linie D-D von Fig. 5, wobei hier, wie auch bei den anderen Figuren, die Schnittdarstellungen jeweils in Richtung der angegebenen Pfeile gesehen sind.

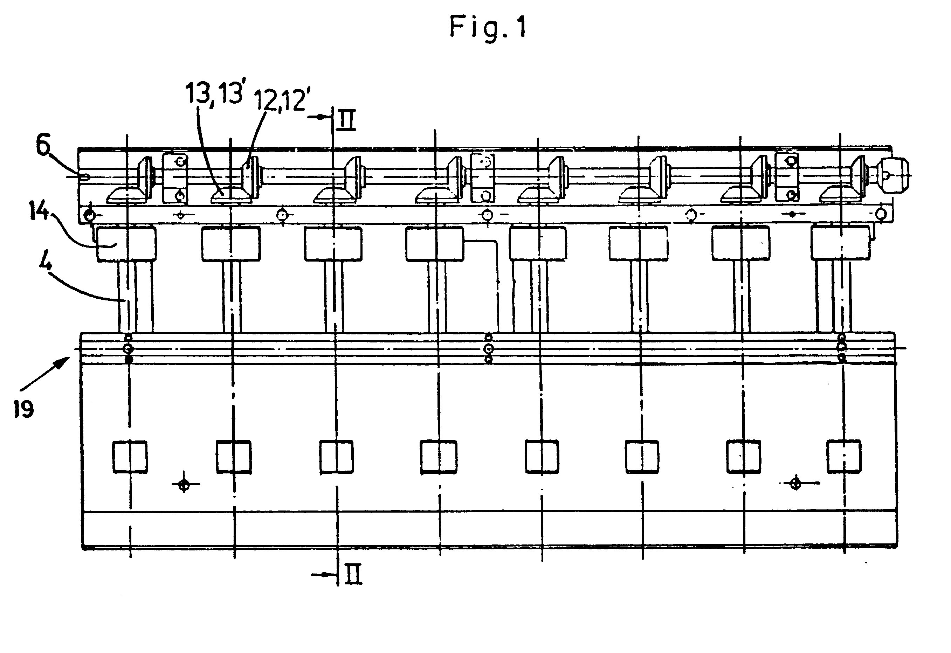

Wie Fig. 1 erkennen lässt, weist eine Längswelle 6 der dort wiedergegebenen Friktionsrollenbahn, die in regelmässigen Abständen in Lagerböcken drehbar gelagert ist, eine Anzahl kegelförmiger Räder 12, 12′ auf, welche jeweils mit einem kegelförmigen Rad 13, 13′ zusammenwirken, welches auf jeweils einer Querwelle 4 angebracht ist. Die Querwellen 4 tragen Friktionsrollen 14. Parallel zu der Längswelle 6 verläuft eine Mittelführung 19, entlang derer ein Werkstückträger (nicht gezeigt) geführt wird.

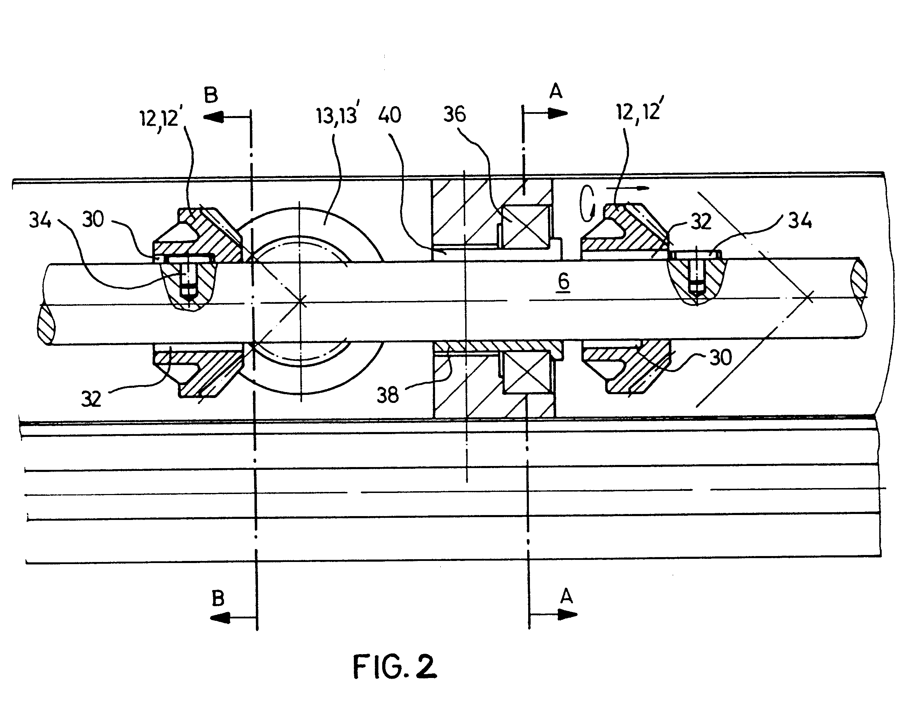

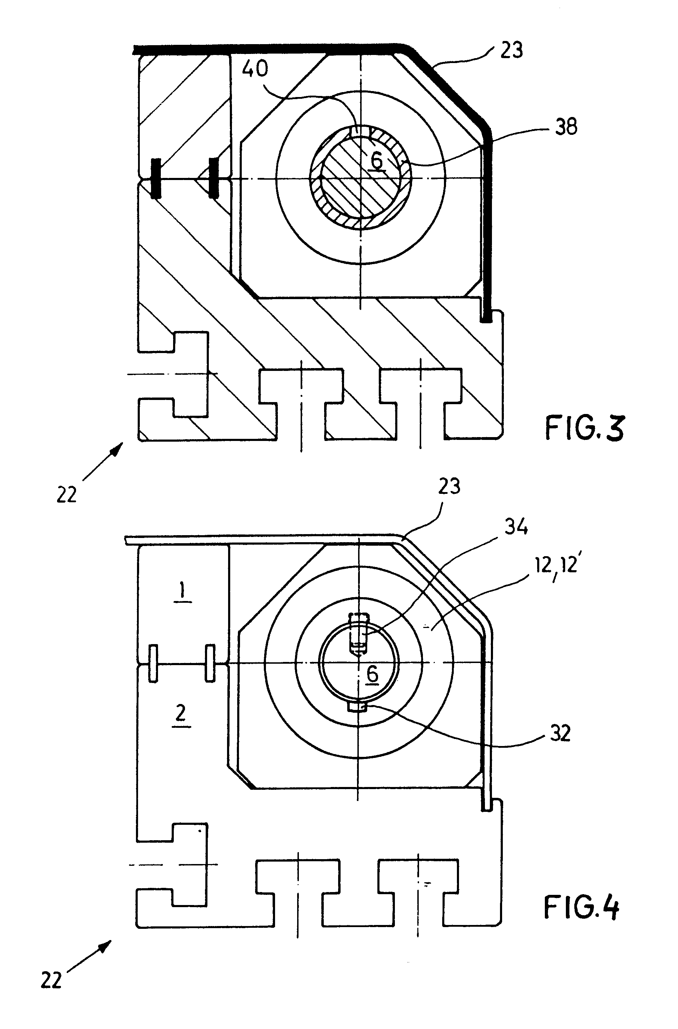

Wie Fig. 2 in Verbindung mit Fig. 3 und 4 erkennen lässt, weisen die kegelförmigen Räder 12, 12′ — die kegelförmigen Räder 12, 12′ bzw. die hiermit zusammenwirkenden Räder 13, 13′ können entweder als Reibräder oder auch als miteinander kämmende Kegelräder ausgebildet sein, im letztgenannten Fall mit einer entsprechenden Reibkupplung zwischen dem betreffenden Kegelrad und der jeweiligen Querwelle 4 — an ihrer der Längswelle 6 zugewandten Innenumfangsfläche jeweils eine zu der dem jeweils zugeordneten kegelförmigen Rad 13, 13′ abgewandten Stirnfläche (in Fig. 2 also nach links) offene Innen-Ringnut 30 sowie an einer Umfangsposition eine durchgehende axiale Längsnut 32 auf. Die Längswelle 6 ist mit einem einseitig radial vorstehenden Zapfen 34 versehen, welcher sich an der Position des jeweiligen kegelförmigen Rades 12, 12′ befindet. Der Zapfen 34 ist dabei jeweils in der aus der Zeichnung ersichtlichen Weise in eine Blindbohrung der Längswelle 6 eingeschraubt.

Ferner lässt Fig. 2 in Verbindung mit Fig. 3 erkennen, dass die Längswelle 6 zu ihrer Lagerung jeweils mit einem Kugellager 36 zusammenwirkende Lagerbuchsen 38 aufweist, die an einer Umfangsposition ihrer der Längswelle 6 zugewandten Innenumfangsfläche mit einer durchgehenden axialen Entriegelungsnut 40 zum Passieren der Zapfen 34 in der weiter unten noch beschriebenen Weise versehen sind.

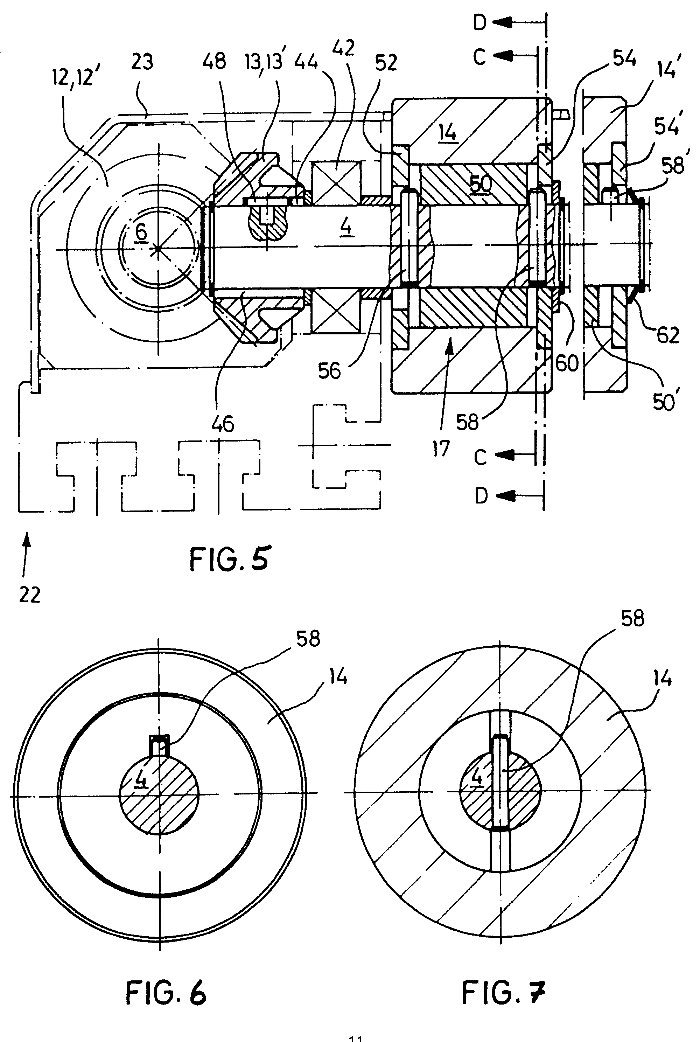

Aus Fig. 5 in Verbindung mit Fig. 6 und Fig. 7 geht hervor, dass auch die dort gezeigte Querwelle 4, in einem Kugellager 42 eines Aluminiumprofils 22 gelagert, das dort gezeigte kegelförmige Rad 13, 13′, welches eine in Fig. 5 nach rechts, also zu der dem zugeordneten kegelförmigen Rad 12, 12′ der Längswelle 6 abgewandten Seite, offene Ringnut 44 sowie eine durchgehende axiale Längsnut 46 aufweist, mittels eines Zapfens 44 lösbar in ganz analoger Weise trägt, wie dies bei den kegelförmigen Rädern 12, 12′ bzw. der Längswelle 6 der Fall ist und weiter oben bereits beschrieben wurde. Fig. 5 lässt in Verbindung mit Fig. 6 und 7 weiterhin erkennen, dass die eigentliche Friktionsrolle 14 jeweils auf einer Bundbuchse 17 sitzt, die dreiteilig ausgebildet ist, nämlich aus einer Lagerhülse 50 sowie zwei Stirnflanschen 52, 54 besteht. Die Lagerhülse 50 sowie die Stirnflansche 52, 54 sind derart in der aus der Zeichnung ersichtlichen Weise mit axialen bzw. radialen Schlitzen, Nuten und Ausnehmungen versehen, dass in der in Fig. 5 dargestellten relativen Winkelstellung zwischen Querwelle 4 und den vorgenannten Bauteilen unter der Einwirkung zweier Radialstifte 56, 58 in Verbindung mit einem axial wirkenden Klemmring 60 die Friktionsrolle gegen axiale Verschiebung gesichert auf der Querwelle 4 sitzt, durch entsprechende Relativverdrehung der Radialstifte 56, 58 gegen die Lagerhülse 50 bzw. die Stirnflansche 52, 54 hingegen eine axiale Relativverschiebung zwischen der Querwelle 4 und den Friktionsrollen 14 ermöglicht wird.

Bei dem in Fig. 5 rechts gezeigten modifizierten Ausführungsbeispiel ist der Stirnflansch 54′ — die Bezugszeichen 50′ bzw. 58′ bezeichnen die Lagerhülse bzw. den entsprechenden Radialstift dieses modifizierten Ausführungsbeispieles — unter der Einwirkung einer Tellerfeder 62 in axialer Richtung an die eigentliche Friktionsrolle 14′ gedrückt. Hierdurch wird bewirkt, dass sich nicht nur eine gewichtsgesteuerte, sondern auch eine durch Federwirkung erzeugte Friktion zwischen der Friktions-Bundbuchse 17 und der eigentlichen Friktionsrolle 14′ ergibt.

Zur Montage bzw. Demontage der Längswelle 6 wird jeweils eine derartige winkelmässige Relativstellung zwischen dem jeweiligen kegelförmigen Rad 12, 12' und der Längswelle 6 hergestellt, dass die jeweiligen Zapfen 34 die jeweiligen Längsnuten 32 passieren können; in ähnlicher Weise ermöglicht eine entsprechende winkelmässige Orientierung der Längswelle 6 relativ zu der Lagerbuchse 38 ein Passieren der Zapfen 34 durch diese hindurch. Demzufolge ist es also möglich, bedarfsweise die Längswelle 6 durch Bewegung in Längsrichtung der Friktionsrollenbahn zu montieren bzw. zu demontieren, weiterhin auch die entsprechenden kegelförmigen Räder 12, 12' je nach Bedarf in Längsrichtung zu verschieben, während sich bei der in Fig. 2 links gezeigten Winkelstellung der kegelförmigen Räder 12, 12' zur Längswelle 6 eine Verriegelung durch das Zusammenwirken des Zapfens 34 mit der einseitig offenen Ringnut 30 ergibt.

In völlig analoger Weise ermöglicht eine entsprechende Dreheinstellung der kegelförmigen Räder 13, 13' bezüglich der Querwelle 4, wie aus Fig. 2 ersichtlich, eine axiale Relativbewegung zwischen der Querwelle 4 und dem betreffenden kegelförmigen Rad 13, 13'. Ferner lässt sich, nach Lösen des Klemmringes 60 bzw. der Tellerfeder 62, durch entsprechende Verdrehungen zwischen Lagerhülse 50, Stirnflanschen 52, 54 und Querwelle 4 mit Radialstiften 56, 58 eine axiale Relativbewegung zwischen Querwelle 4 und Friktionsrolle 14 durchführen. Hierdurch ist es möglich, die einzelnen Querwellen 4 aus der Friktionsrollenbahn durch horizontale Bewegung in Axialrichtung herauszunehmen, wodurch Reparaturarbeiten etc. ausserordentlich vereinfacht werden.

**Patentansprüche**

1. Friktionsrollenbahn mit einer Mehrzahl von an ihren Enden in Seitenwangen gelagerten, parallel zueinander liegenden, das zu transportierende Gut tragende Friktionsrollen (14) aufnehmenden Querwellen (4) welche über je ein Paar von kegelförmigen Rädern (12, 12'; 13, 13') von einer sich entlang einer der Seitenwangen erstreckenden Längswelle (6) angetrieben werden, wobei die kegelförmigen Räder als Reibräder (12, 13) mit mittels Federandrucks des jeweiligen auf der Querwelle (4) sitzenden Reibrades (13) gegen das zugeordnete, auf der Längswelle (6) sitzende Reibrad (12) fest einstellbarer gegenseitiger Friktion ausgebildet sind oder bei Ausgestaltung der Räder als formschlüssige Kegelräder (12', 13') in der Querwelle (4) eine mittels Federandrucks auf einen festen Wert einstellbare Reibkupplung (21) zwischen dem jeweiligen auf der Querwelle (6) sitzenden Kegelrad (13') und dem die Friktionsrollen tragenden Teil der jeweiligen Querwelle (6) angeordnet ist, dadurch gekennzeichnet, dass die kegelförmigen Räder (12, 12'; 13, 13') an ihrer der Längs- (6) und/oder Querwelle (4) zugewandten Innenumfangsfläche eine zu der dem jeweils zugeordneten kegelförmigen Rad (13, 13'; 12, 12') abgewandten Stirnfläche offene Innen-Ringnut (30, 44) sowie an einer Umfangsposition eine durchgehende axiale Längsnut (32, 46) aufweisen und dass die Längswelle (6) bzw. die Querwelle (4) an der Position des jeweiligen kegelförmigen Rades (12, 12'; 13, 13') einen einseitig radial vorstehenden Zapfen (34, 48) aufweist, der in der Verriegelungsstellung der Längsnut (32, 46) umfangsmässig im wesentlichen um 180° gegenüberliegend das betreffende kegelförmige Rad (12, 12'; 13, 13') auf der Längs- (6) bzw. Querwelle (4) unter Eingreifen in die einseitig offene Ringnut (30, 44) formschlüssig gegen eine axiale Verschiebung von dem zugeordneten kegelförmigen Rad (13, 13'; 12, 12') fort sichert und in um 180° hiergegen verdrehter Lösestellung unter Eintritt in die Längsnut (32, 46) eine freie axiale Verschiebung des jeweiligen kegelförmigen Rades (12, 12'; 13, 13') relativ zur Längs- (6) bzw. Querwelle (4) ermöglicht.

2. Friktionsrollenbahn nach Anspruch 1, dadurch gekennzeichnet, dass der Zapfen (34, 48) oder dergleichen in eine radiale Blindbohrung der Längs- (6) bzw. Querwelle (4) eingeschraubt ist.

**Claims**

1. A friction roller train having a number of cross-shafts (4) which are mounted by way of their ends in side uprights, are disposed parallel to one another, receive friction rolls (14) carrying the material to be conveyed and are each driven by way of a pair of conical wheels (12, 12'; 13, 13') by a longitudinal shaft (6) extending along one of the side uprights, the conical wheels being either in the form of friction wheels (12, 13), with a fixedly adjustable frictional engagement produced by spring pressure between the friction wheel (13) on the corss-shaft (4) and the associated friction wheel (12) on the longitudinal shaft (6), or of positively engaging bevel gears (12', 13'), in which event a friction clutch (21) adjustable by spring pressure to a fixed value is disposed between the level gear (13') on the cross-shaft (6) and the cross-shaft part carrying rge friction rolls, characterised in that the conical wheels (12, 12'; 13, 13') are formed, on their inner peripheral surface near the longitudinal shaft (6) and/or cross-shaft (4), with an internal annular groove (30, 44) and at a place on the periphery with a continuous longitudinal axial groove (32, 46), the internal groove (30, 44) being open towards the end face remote from the associated conical wheel (13, 13'; 12, 12'); and the longitudinal shaft (6) and corss-shaft (4) respectively have at the position of the conical wheel (12, 12'; 13, 13') a pin (34, 48) which projects radially on one side and which in the locking position, at a substantially 180° offset around the periphery from the longitudinal groove (32, 46), by engaging in the inner annular groove (30, 44), secures the particular conical wheel (12, 12'; 13, 13') concerned positively on the respective longitudinal shaft (6) and cross-shaft (4) against moving away axially from the associated conical wheel (13, 13'; 12, 12'), whereas the pin (34, 48) when in the diametrically opposite release position by engaging in the longitudinal groove (32, 46) permits the particular conical wheel (12, 12'; 13, 13') concerned to move freely in the axial direction relatively to the longitudinal shaft (6) and cross-shaft (4) respectively.

2. A friction roller train, characterised in that the pin (34, 48) or the like is screwed into a radial blind bore in the longitudinal shaft (6) and cross-shaft (4) respectively.

## Revendications

1. Convoyeur à rouleaux de friction muni d'une pluralité d'arbres transversaux (4) sur lesquels sont montés des rouleaux de friction (14) supportant la matière à transporter, parallèles les uns aux autres et engagés à leurs extrémités dans des parois supports latérales, arbres transversaux (4) qui sont entraînés par un arbre longitudinal (6) s'étendant le long d'une des parois supports latérales, par l'intermédiaire chacun d'une paire de roues coniques (12, 12'; 13, 13'), les roues coniques étant agencées en roues de friction (12, 13) dont la friction mutuelle est parfaitement réglable au moyen de la pression élastique de la roue à friction (13) montée sur l'arbre transversal (4) contre la roue de friction (12) associée, montée sur l'arbre longitudinal (6), ou bien, avec des roues agencées en roues coniques en prise par leur forme (12', 13'), un accouplement à friction (21), réglable à une valeur fixe, par pression de ressort, étant disposé dans chaque arbre transversal (4), entre la roue conique (13') montée sur l'arbre transversal (4) et la partie de l'arbre transversal (4) portant le rouleau de friction, caractérisé par le fait que les roues coniques (12, 12'; 13, 13') comportent sur leur surface périphérique intérieure, tournée vers l'arbre longitudinal (6) et/ou l'arbre transversal (4), une rainure annulaire intérieure (30, 44) ouverte sur la surface frontale écartée de la roue conique (13, 13'; 12, 12') qui lui est associée, ainsi que, sur un emplacement périphérique, une rainure longitudinale (32, 46) axiale traversante, et que l'arbre longitudinal (6) et l'arbre transversal (4) possèdent, chacun, à l'emplacement de la roue conique correspondante (12, 12'; 13, 13'), un tenon (34, 48), en saillie radialement d'un côté, qui, dans la position de verrouillage de la rainure longitudinale (32, 46) opposée, périphériquement, à peu près à 180° par rapport à la roue conique concernée (12, 12'; 13, 13') sur l'arbre longitudinal (6) ou transversal (4), assure en permanence contre tout déplacement axial de la roue conique associée (13, 13'; 12, 12'), en étant en prise par correspondance de forme, dans la rainure annulaire, ouverte d'un côté (30, 44), et qui, dans la position de déblocage tournée de 180° par rapport à la précédente, permet, en pénétrant dans la rainure longitudinale (32, 46), un déplacement axial libre de chaque roue conique (12, 12'; 13, 13') par rapport à l'arbre longitudinal (6) au transversal (4).

2. Convoyeur à rouleaux de friction selon la revendication 1, caractérisé par le fait que le tenon (34, 48), ou similaire, est vissé dans un alésage borgne, radial de l'arbre longitudinal (6) ou transversal (4).

Fig.1

0 149 694

FIG. 2

0 149 694

FIG.3

FIG.4

FIG. 5

FIG. 6

FIG. 7